# FASCICULE DE BREVET EUROPEEN

(11) **EP 0 674 444 B1**
(45) Date de publication et mention de la délivrance du brevet: **24.11.2004**
(21) Numéro de dépôt: 95410018.6
(22) Date de dépôt: 22.03.1995
(51) Int. Cl.: H04N 7/36

(54) **Filtre de matrices de pixels**
Filter für Matrix von Pixeln
Filter for matrix of pixels

(30) Priorité: 24.03.1994 FR 9403706
(43) Date de publication de la demande: 27.09.1995
(73) Titulaire: STMicroelectronics S.A., 92120 Montrouge (FR)
(72) Inventeur: Artieri, Alain, F-38240 Meylan (FR)
(74) Mandataire: de Beaumont, Michel

(56) Documents cités:
- EP-A- 0 407 273
- EP-A- 0 517 095
- EP-A- 0 528 739
- EP-A- 0 557 948
- IEEE TRANSACTIONS ON CONSUMER ELECTRONICS, vol. 38, no. 3, Août 1992 NEW YORK, pages 570-575, XP 000311895 P. SCHIEFER 'Picture processing RAMs (PPRAMs) for motion estimation'
- IEEE MICRO, vol. 12, no. 5, Octobre 1992 LOS ALAMITOS, pages 22-27, XP 000330853 O. DUARDO ET AL. 'Architecture and implementation of ICs for a DSC-HDTV video decoder system'

## Description

La présente invention concerne un filtre permettant d'effectuer ce que l'on appelle le filtrage demi-pixel d'un bloc d'image selon les normes MPEG.

Le fitrage demi-pixel consiste à traiter les pixels d'un bloc d'image, ou matrice de pixels, de manière qu'un pixel donné de la matrice soit remplacé par la somme de ce pixel, du pixel immédiatement à droite et du pixel immédiatement en-dessous. La matrice filtrée obtenue en traitant ainsi tous les pixels correspond à une matrice décalée vers le bas et vers la droite d'un demi-pixel, d'où la dénomination "filtre demi-pixel". Le filtre peut en outre être commandé pour n'effectuer aucun décalage (aucun filtrage) ou bien un décalage seulement vers la droite ou seulement vers le bas.

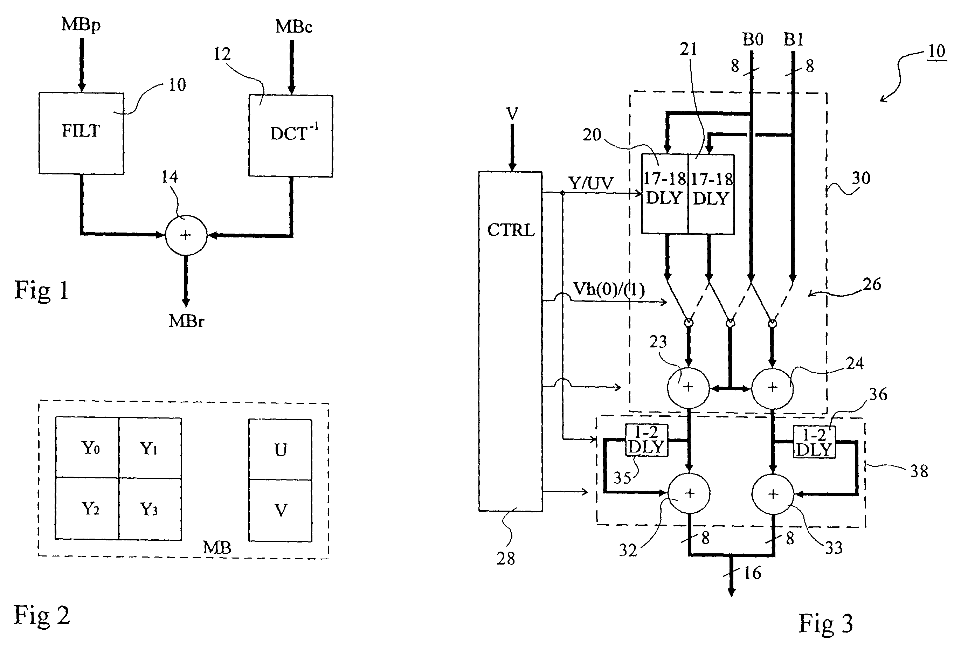

La figure 1 représente une partie de décodeur MPEG dans lequel on utilise un filtre demi-pixel 10. La sortie du filtre 10 et la sortie d'un circuit de transformée cosinus discrète inverse (DCT⁻¹) 12 sont sommées par un additionneur 14 pour fournir les pixels d'un bloc d'image reconstruit MBr. Le circuit DCT 12 reçoit des pixels d'un bloc d'image couramment décodé MBc et le filtre 10 reçoit les pixels d'un bloc dit prédicteur MBp cherché dans une image précédemment reconstruite.

La position de ce bloc prédicteur dans l'image précédemment reconstruite est trouvée grâce à un vecteur d'estimation de mouvement. Les composantes (horizontale et verticale) de ce vecteur peuvent être non-entières. Le coin supérieur gauche du bloc à traiter est déterminé par les parties entières des composantes ; le filtre demi-pixel décale ou non le bloc d'un demi-pixel vers la droite ou vers le bas selon que la composante horizontale ou verticale du vecteur est entière ou non.

Les blocs d'image traités sont en fait des macroblocs comprenant de façon séparée des pixels de luminance Y, et des pixels de chrominance U et V.

La figure 2 illustre un exemple de format, noté 4:2:0, d'un macrobloc MB. Ce macrobloc comprend une matrice de luminanoe Y de 16x16 pixels formée de quatre sous-matrices Y0 à Y3 de 8x8 pixels, et une matrice de chrominance de 16x8 pixels formée de deux sous-matrices U et V de 8x8 pixels. Un autre format possible est le format noté 4:2:2 où la matrice de chrominanoe comprend deux sous-matrices U et V de 16x8 pixels.

EP-A-0 517 095 décrit un circuit de traitement de pixels d'une matrice de pixels. Ce traitement est une interpolation et non un filtrage. En particulier, ce document montre un circuit de traitement de pixels dans lequel n additionneurs sont connectés au moins de manière que le i-ème additionneur reçoive le i-ème de 2n pixels sur une première entrée et le (i+1)ème des 2n pixels sur une deuxième entrée.

Un objet de la présente invention est de prévoir un filtre demi-pixel particulièrement simple et rapide.

Cet objet est atteint grâce à un filtre de matrices de pixels comprenant : n bus d'entrée pour recevoir des pixels de n colonnes successives de la matrice ; n circuits de retard recevant respectivement les pixels des n bus d'entrée, ces circuits de retard introduisant chacun un retard d'une colonne, d'où il résulte que 2n pixels sont simultanément transmis sur successivement les sorties des n circuits de retard et les n bus d'entrée ; et n additionneurs connectés au moins de manière que le i-ème additionneur (i=1,2,...n) reçoive le i-ème des 2n pixels sur une première entrée et le (i+1)ème des 2n pixels sur une deuxième entrée.

Selon un mode de réalisation de la présente invention, les n additionneurs sont connectés à un commutateur prévu pour que le i-ème additionneur reçoive :
sur sa première entrée l'un parmi les i-ème à (i+n-1)ème des 2n pixels,
sur sa deuxième entrée l'un parmi les (i+1)ème à (i+n)ème des 2n pixels,
selon qu'un vecteur déterminant la position de la matrice dans une image a une composante horizontale respective égale à 0 à n-1 modulo n.

Selon un mode de réalisation de la présente invention, la sortie de chacun des n additionneurs est reliée à un additionneur supplémentaire respectif directement et par l'intermédiaire d'un circuit de retard d'au moins un pixel.

Selon un mode de réalisation de la présente invention, le retard d'au moins un pixel est d'un pixel si la matrice traitée est une matrice de pixels de luminance et de deux pixels si la matrice traitée est une matrice de pixels de chrominance.

La présente invention vise également un procédé de traitement d'une matrice de pixels cherchée à l'aide d'un vecteur dans une mémoire d'image accessible par un bus de M pixels de large. Le procédé comprend les étapes consistant à écrire par le bus dans une mémoire à double accès successivement toutes les bandes d'image de M pixels de large contenant partiellement la matrice ; à lire dans la mémoire à double accès par un bus de n pixels de large toutes les bandes d'image de n pixels de large contenant partiellement la matrice ; et à fournir ces bandes ligne par ligne à un filtre selon l'invention qui traite en parallèle chaque ligne.

Ces objets, caractéristiques et avantages ainsi que d'autres de la présente invention seront exposés plus en détail dans la description suivante de modes de réalisation particuliers faite à titre non-limitatif à l'aide des figures jointes parmi lesquelles :
la figure 1, précédemment décrite, représente partiellement un décodeur MPEG ;
la figure 2, précédemment décrite, illustre un macrobloc d'image du format 4:2:0 ;
la figure 3 représente un mode de réalisation de filtre demi-pixel selon l'invention ;
les figures 4A et 4B illustrent le fonctionnement du filtre de la figure 3 ;
la figure 5 représente partiellement un autre mode de réalisation de filtre demi-pixel selon l'invention ;
la figure 6 représente un filtre selon l'invention précédé d'un circuit d'adaptation de largeur de bus entre une mémoire d'image et le filtre ;
les figures 7A et 7B sont destinées à illustrer un procédé selon l'invention pour adapter la largeur du bus de la mémoire d'image à la largeur du bus du filtre ; et
la figure 8 représente un mode de réalisation de mémoire à double accès utilisé dans le circuit de la figure 6.

Un filtre selon l'invention est destiné à traiter des matrices de pixels par bandes de plusieurs pixels de large. La largeur des bandes est choisie de manière à correspondre à la largeur du bus du filtre, la largeur de ce bus devant être égale à la largeur du bus de sortie du circuit DCT 12 (figure 1).

Dans l'exemple de la figure 3, le bus du filtre est de 16 bits, ce qui correspond à une largeur de bande de 2 pixels. Les pixels se trouvant dans une colonne de rang pair de l'image (on suppose que le premier rang est 0) sont fournis successivement à un bus d'entrée B0 du filtre et les pixels se trouvant dans une colonne de rang impair sont fournis successivement à un bus d'entrée B1. Les bus B0 et B1 ont chacun une largeur d'un pixel, c'est-à-dire de 8 bits. Chacun des bus B0 et B1 est relié à un circuit de retard respectif 20 et 21 introduisant un retard correspondant à une colonne de pixels de la matrice à traiter.

Les sorties des circuits de retard 20 et 21 et les bus B0 et B1 sont reliés à deux additionneurs 23 et 24 par l'intermédiaire d'un commutateur 26. Dans une première position, représentée en trait plein, le commutateur 26 relie les deux entrées de l'additionneur 23 respectivement aux sorties des circuits de retard 20 et 21, et relie une première entrée de l'additionneur 24 à la sortie du circuit de retard 21 et une deuxième entrée au bus B0.

Dans une deuxième position, représentée en pointillés, le commutateur 26 relie les deux entrées de l'additionneur 24 respectivement aux bus B0 et B1, et relie une première entrée de l'additionneur 23 à la sortie du circuit de retard 21 et une deuxième entrée au bus B0.

Un circuit de commande 28 reçoit les composantes du vecteur V déterminant la position du macrobloc à traiter. Chacune des composantes est entière ou non. Si la composante horizontale Vh du vecteur est entière, le circuit de commande 28 inhibe les additionneurs 23 et 24, de manière que les pixels arrivant sur les bus B0 et B1 soient transmis sans modification à des additionneurs 32 et 33, respectivement. Si la composante verticale du vecteur est entière, le circuit de commande 28 inhibe les additionneurs 32 et 33.

La première position du commutateur 26 est sélectionnée par le circuit de commande 28 lorsque la partie entière de la composante horizontale Vh est paire. La deuxième position du commutateur 26 est sélectionnée lorsque la partie entière de la composante horizontale Vh est impaire.

L'ensemble des éléments 20 à 26 constitue un filtre horizontal 30 du filtre demi-pixel. Le filtre horizontal est destiné à effectuer les sommes deux par deux des pixels des lignes de la matrice et à fournir chaque pixel somme à un filtre vertical décrit ci-dessous.

La sortie de chacun des additionneurs 23 et 24 est fournie à un additionneur respectif 32 et 33 directement sur une première entrée et sur une deuxième entrée par l'intermédiaire d'un circuit de retard respectif 35 et 36 d'un pixel. L'ensemble des éléments 32 à 36 constitue un filtre vertical 38 destiné à sommer deux par deux les pixels de chaque colonne de la matrice traitée.

Les sorties des additionneurs 32 et 33 fournissent une bande filtrée de la matrice traitée, bande de deux pixels de large dans le présent exemple.

Dans un macrobloc du type de la figure 2, les pixels de luminance et de chrominance sont traités séparément. On commence par traiter la matrice de luminance Y (constituée des sous-matrices Y0 à Y3) qui est normalement de 16x16 pixels. Pour obtenir après le filtrage demi-pixel une matrice qui soit également de 16x16 pixels, il faut ajouter à la matrice traitée une colonne à droite et une ligne en bas. On fournit donc au filtre une matrice de 17x17 pixels. On opère de la même manière avec chacune des sous-matrices de chrominance U et V qui deviennent alors des sous-matrices de 9x9 pixels et forment une matrice de chrominance de 18x9 pixels. Par ailleurs, la matrice de chrominanoe comprend de façon alternée une ligne de pixels U et une ligne de pixels V. Ainsi, pour effectuer un fitrage vertical correct d'une matrice de chrominance, le délai des circuits de retard 35 et 36 doit être choisi de deux pixels, de manière à toujours sommer deux pixels de même nature (U ou V).

Comme cela est représenté à la figure 3, le circuit de commande 28 fournit un signal Y/UV permettant de sélectionner un pixel de délai dans les circuits 35 et 36 lorsque la matrice traitée est une matrice de luminance, et de choisir deux pixels de délai lorsque la matrice traitée est une matrice de chrominance. De même, le signal Y/UV permet de sélectionner dans les circuits 20 et 21 un délai de 17 pixels si la matrice traitée est une matrice de luminance, et un délai de 18 pixels si la matrice traitée est une matrice de chrominance.

Les circuits de retard 20, 21 et 35, 36 peuvent facilement être réalisés avec des bascules. Avantageusement, les circuits 20 et 21 sont des mémoires du type premier entré-premier sorti (FIFO) qui sont remplies au fur et à mesure que les pixels arrivent sur les bus B0 et B1 et que l'on commence à vider une fois que le remplissage atteint 17 ou 18 pixels, selon l'état du signal Y/UV.

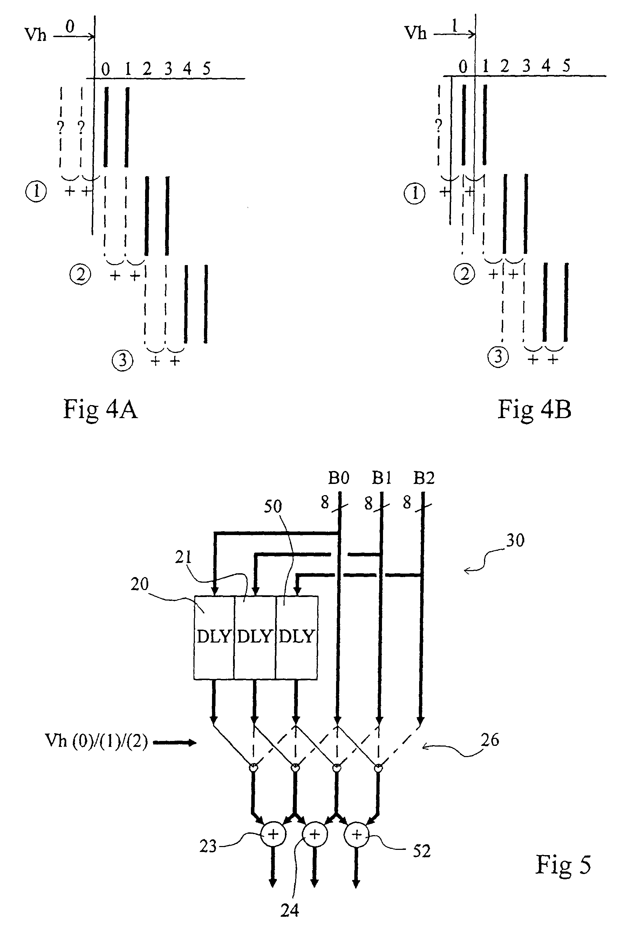

La figure 4A illustre le fonctionnement du filtre horizontal de la figure 3 lorsque la composante horizontale Vh du vecteur d'estimation de mouvement est paire, par exemple égale à 0 (ce qui veut dire que la matrice à filtrer commence à la colonne de rang 0). La position du commutateur 26 est celle représentée en trait plein à la figure 3. L'arrivée d'une colonne de matrice sur un bus B0 ou B1 est représentée par une barre verticale en trait gras. La même colonne retardée par un circuit 20 ou 21 est représentée en dessous en pointillés. Les étapes successives de filtrage sont représentées par des nombres entourés.

A une étape 1, on fournit la colonne 0 sur le bus B0 et la colonne 1 sur le bus B1. L'additionneur 23 reçoit les sorties des circuits de retard 20 et 21 qui fournissent des valeurs nulles et en tout cas sans signification. L'additionneur 24 reçoit la colonne 0 et la sortie sans signification du circuit de retard 21. L'étape 1 est une étape à vide destinée à obtenir les colonnes 0 et 1 retardées ; les valeurs fournies par le filtre sont ignorées.

A une étape 2, on fournit sur les bus B0 et B1 les colonnes 2 et 3 de la matrice. Simultanément, les colonnes 0 et 1, retardées, sont fournies par les circuits de retard 20 et 21. L'additionneur 23 somme les pixels des colonnes 0 et 1 fournis par les circuits de retard 20 et 21, et l'additionneur 24 somme les pixels de la colonne 1 retardée et de la colonne 2 fournie par le bus B0.

A une étape 3, on fournit les colonnes 4 et 5 sur les bus B0 et B1. Simultanément, les circuits de retard 20 et 21 fournissent les colonnes 2 et 3 retardées. L'additionneur 23 somme les pixels des colonnes 2 et 3 retardées, et l'additionneur 24 somme les pixels de la colonne 3 retardée et de la colonne 4.

On continue ainsi à fournir les colonnes deux par deux, jusqu'à ce que toutes les colonnes de la matrice à traiter sont fournies. Chaque triplet de colonnes (une colonne directe et deux retardées) ainsi traité par le filtre horizontal 30 fournit deux colonnes qui sont traitées simultanément par le filtre vertical 38. Le filtre vertical 38 remplace dans chaque colonne un pixel par la somme de ce même pixel et du pixel de même nature (luminance, chrominance U ou V) qui le précède.

La figure 4B illustre le fonctionnement du filtre de la figure 3 dans le cas où la composante horizontale Vh du vecteur d'estimation de mouvement est impaire, par exemple égale à 1 (ce qui veut dire que la matrice à traiter commence à la colonne de rang 1). Le commutateur 26 est dans la position représentée en pointillés à la figure 3.

A une étape 1, on fournit sur les bus B0 et B1 la colonne 0, qui n'appartient pas à la matrice à traiter, et la colonne 1. L'additionneur 23 somme les pixels alors sans signification sortant du circuit de retard 21 et les pixels de la colonne 0. L'additionneur 24 somme les pixels des colonnes 0 et 1. Cette étape 1 est une étape à vide destinée à obtenir la colonne 1 retardée.

A une étape 2, on fournit les colonnes 2 et 3 sur les bus B0 et B1. Simultanément, les circuits de retard 20 et 21 fournissent les colonnes 0 et 1. L'additionneur 23 somme les pixels de la colonne 1 fournis par le circuit de retard 21 et de la colonne 2 fournis sur le bus B0. L'additionneur 24 somme les pixels des colonnes 2 et 3 fournis par les bus B0 et B1.

A une étape 3, on fournit sur les bus B0 et B1 les colonnes 4 et 5. L'additionneur 23 somme les pixels de la colonne 3 retardée et de la colonne 4. L'additionneur 24 somme les pixels des colonnes 4 et 5...

La figure 5 représente un autre mode de réalisation de filtre horizontal selon l'invention, servant à illustrer que ce type de filtre, peut être généralisé pour traiter les matrices par bandes de plus de deux pixels de large. L'exemple de la figure 5 correspond au traitement de bandes de trois pixels de large.

Par rapport au filtre horizontal de la figure 3, le filtre horizontal de la figure 5 comprend un bus d'entrée supplémentaire B2 destiné à recevoir des pixels d'une troisième colonne traitée simultanément aux colonnes arrivant sur les bus B0 et B1. Le bus B2 est relié à l'entrée d'un troisième circuit de retard d'une colonne 50. Un troisième additionneur 52 est associé aux additionneurs 23 et 24. Le commutateur 26 est susceptible de prendre trois positions sélectionnées par le circuit de commande 28.

Une première position du commutateur 26, représentée en trait plein, est sélectionnée lorsque la composante Vh du vecteur d'estimation de mouvement est égale à 0 modulo 3. Dans cette position, l'additionneur 23 reçoit les sorties des circuits de retard 20 et 21, l'additionneur 24 reçoit les sorties des circuits de retard 21 et 50, et l'additionneur 52 reçoit la sortie du circuit de retard 50 et les pixels du bus B0.

Une deuxième position, représentée en pointillés, est sélectionnée lorsque la composante Vh est égale à 1 modulo 3. L'additionneur 23 reçoit les sorties des circuits de retard 21 et 50, l'additionneur 24 reçoit la sortie du circuit de retard 50 et les pixels du bus B0, et l'additionneur 52 reçoit les pixels des bus B0 et B1.

Une troisième position, représentée en trait d'axe, est sélectionnée lorsque la composante Vh est égale à 2 modulo 3. L'additionneur 23 reçoit la sortie du circuit de retard 50 et les pixels du bus B0, l'additionneur 24 reçoit les pixels des bus B0 et B1, et l'additionneur 52 reçoit les pixels des bus B1 et B2.

Pour effectuer le filtrage vertical, l'additionneur 52 est suivi, comme les additionneurs 23 et 24, d'un additionneur (non représenté) associé à un circuit de retard de 1 ou 2 pixels.

L'homme du métier pourra, en fonction de ses besoins, réaliser un filtre selon l'invention permettant de traiter une matrice par bandes de n pixels de large.

Un filtre selon l'invention fait correspondre la première colonne d'une matrice à la première colonne d'une bande.

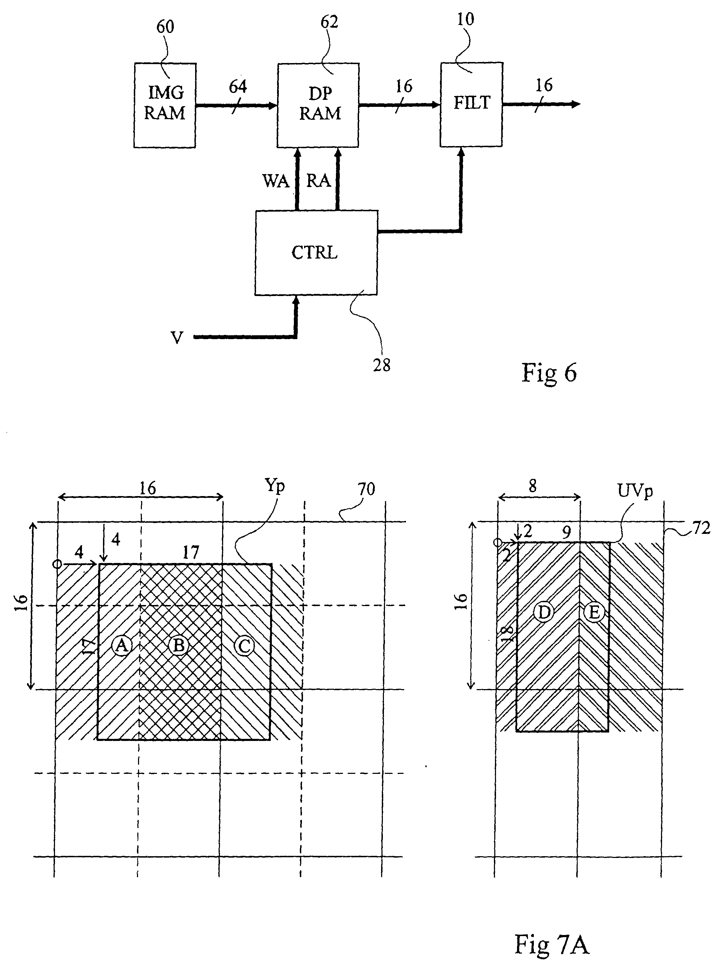

La figure 6 représente un filtre 10 selon l'invention associé à un circuit d'adaptation du bus d'une mémoire d'image 60 au bus du filtre 10. La largeur du bus du filtre 10 dépend, comme on l'a précédemment mentionné, du nombre de colonnes que ce filtre traite en parallèle. Dans l'exemple de la figure 3, le filtre 10 traite deux colonnes en parallèle, ce qui correspond à un bus d'entrée de 16 bits.

Par contre, la mémoire d'image 60 communique par un bus de largeur différente, qui est avantageusement de 64 bits. Cette valeur de 64 bits correspond à une largeur de 8 pixels et donc à la largeur de la matrice de chrominance UV et de chacune des sous-matrices de luminanoe Y0 à Y3. Ces matrices peuvent donc être stockées dans la mémoire d'image ligne par ligne, où chaque ligne correspond à un mot de 64 bits.

Toutefois, comme on l'a précédemment indiqué, les matrices à fournir au filtre 10 sont de 17x17 pixels ou de 18x9 pixels. De plus, ces matrices ne sont pas forcément alignées sur les matrices de chrominance et de luminance stockées dans la mémoire d'image 60, c'est-à-dire que le premier pixel, de 8 bits, d'une matrice à traiter ne correspond pas forcément aux huit premiers bits d'un mot de 64 bits stocké dans la mémoire d'image 60.

Il se pose donc le problème de fournir au filtre 10 un macrobloc prédicteur pouvant être à cheval sur plusieurs macroblocs stockés dans la mémoire d'image. Ce problème est résolu à l'aide d'un circuit de réorganisation selon l'invention comprenant une mémoire à double accès 62 disposée entre le bus de la mémoire 60 et le bus d'entrée du filtre 10.

La mémoire à double accès 62 reçoit des adresses d'écriture WA permettant l'écriture dans cette mémoire à partir du bus de la mémoire d'image 60, et reçoit des adresses de lecture RA permettant de fournir au filtre 10 son contenu. Les adresses WA et RA sont fournies par le circuit de commande 28 qui est destiné à commander la mémoire 62 selon le procédé décrit ci-après à l'aide d'un exemple.

La figure 7A représente partiellement une zone 70 de la mémoire d'image 60 contenant les matrices de luminance Y, et une zone 72 contenant les matrices de chrominance UV. Les matrices de luminance et de chrominance stockées sont représentées par un quadrillage en trait plein. Les sous-matrices de luminance Y0 à Y3 stockées sont représentées par des pointillés. Le bus de 64 bits permet d'accéder à chacune des lignes de 8 pixels délimitée entre deux traits consécutifs (pleins ou en pointillés).

On a représenté en trait gras une matrice de luminance Yp de 17x17 pixels et une matrice de chrominance UVp de 18x9 pixels appartenant à un macrobloc prédicteur qui doit être fourni au filtre 10. Les composantes horizontale et verticale du vecteur d'estimation de mouvement sont par exemple égales à 4 toutes les deux, comme cela est représenté. Ceci veut dire que la première colonne de la matrice Yp correspond à la colonne de rang 4 de la première matrice de luminance stockée dans la zone 70 et que la première ligne de la matrice Yp correspond à la ligne de rang 4 de cette première matrice stockée. Les composantes utilisées pour déterminer la position de la matrice de chrominance UV sont les parties entières des moitiés des composantes du vecteur d'estimation de mouvement.

La matrice Yp est à cheval sur trois bandes A, B et C, représentées par des hachures, de 8 pixels de large et de 17 pixels de haut. Ces trois bandes sont telles que chacune de leurs lignes est accessible en totalité par le bus de 64 bits. De même, la matrice de chrominance UV se trouve à cheval sur deux bandes D et E de 8 pixels de large et de 18 pixels de haut.

Les bandes A à E sont écrites successivement ligne par ligne dans la mémoire à double accès 62 à des adresses successives.

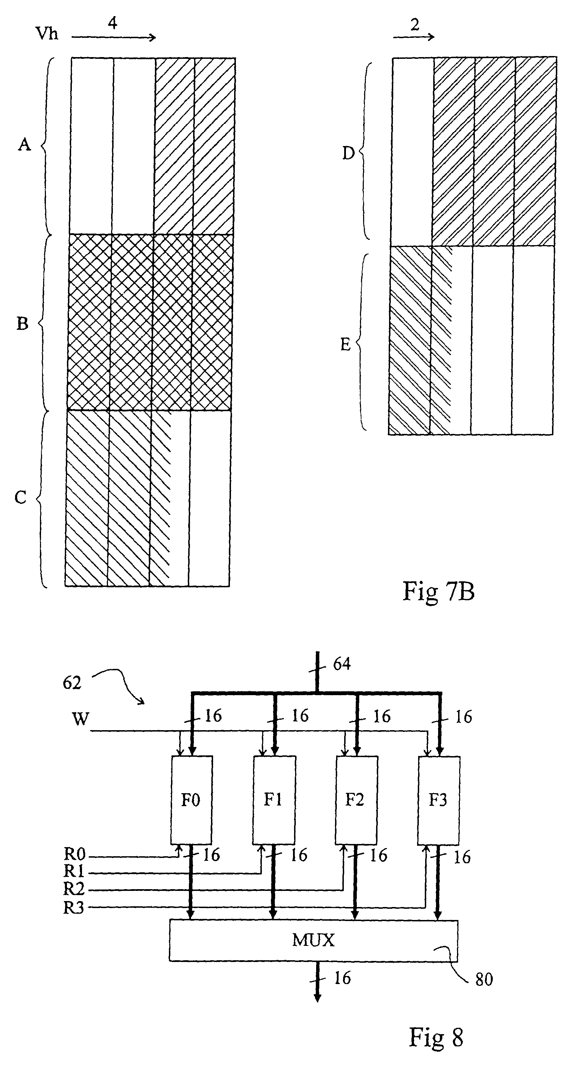

La figure 7B représente l'état de remplissage de la mémoire 62 après cette opération. Dans cette figure, chaque case représente deux colonnes de pixels et chaque rangée de cases correspond à l'une des bandes A à E, c'est-à-dire que les rangées ont une largeur de 64 bits (ou 8 pixels). En remplissant ainsi la mémoire 62 par bandes, on la remplit de la totalité du macrobloc à traiter mais aussi de données inutiles qui sont représentées à la figure 7B par des zones blanchies des cases. En effet, dans la rangée A, les quatre premières colonnes n'appartiennent pas à la matrice de luminance à traiter et, dans la rangée C, les trois dernières colonnes non plus. De même, dans la rangée D, les deux premières colonnes n'appartiennent pas à la matrice de chrominance à traiter et les cinq dernières colonnes de la rangée E non plus. Ainsi, pour fournir les matrices de luminance et de chrominance au filtre 10, la mémoire à double accès 62 est lue à partir de la troisième case de la rangée A jusqu'à la troisième case de la rangée C, puis à partir de la deuxième case de la rangée D jusqu'à la deuxième case de la rangée E. Les points de départ de ces lectures de la mémoire 62 sont fournis au circuit de commande 28 par le vecteur d'estimation de mouvement V, plus précisément par la composante horizontale de celui-ci.

Chacune des cases correspond à deux colonnes de pixels et peut donc être fournie par paires de pixels sur le bus de 16 bits d'entrée du filtre 10. Le filtre traite la paire de colonnes de chaque case selon le procédé décrit en relation avec la figure 4A.

Si la composante horizontale du vecteur est impaire, la première colonne de la matrice à traiter se trouve dans la deuxième colonne d'une case, la première colonne de cette case étant vide. La paire de colonnes de chaque case est traitée selon le procédé décrit en relation avec la figure 4B, qui élimine la première colonne, vide, de la première case occupée.

La figure 8 représente un exemple de mémoire à double accès 62 ayant un bus d'entrée de 64 bits et un bus de sortie de 16 bits. Elle comprend quatre mémoires FIFO de 16 bits F0 à F3 dont chacune correspond à une colonne de cases de la figure 7B et reçoit 16 bits correspondants du bus de 64 bits. La sortie de chacune des mémoires FIFO peut être sélectionnée en tant que sortie de la mémoire à double accès par un multiplexeur 80. Les mémoires FIFO F0 à F3 sont sélectionnées en écriture simultanément par une ligne W. La lecture de ces mémoires FIFO s'effectue de la manière suivante, à l'aide de lignes respectives R0 à R3.

Dans l'exemple de la figure 7B, pour lire la première paire de colonnes de luminance, stockée dans la mémoire F2, les mémoires F0 à F2 sont simultanémént sélectionnées en lecture et le multiplexeur 80 sélectionne la sortie de la mémoire F2. Les paires de colonnes suivantes sont lues en sélectionnant en lecture cycliquement les mémoires F3, F0, F1 et F2, le multiplexeur 80 sélectionnant cycliquement les sorties de ces mémoires. La dernière colonne de luminance, stockée dans la mémoire F2, est lue en sélectionnant simultanément en lecture les mémoires F2 et F3, le multiplexeur 80 sélectionnant la sortie de la mémoire F2. On procède ensuite de manière similaire pour lire les colonnes de chrominance, dont la première et la dernière sont stockées dans la mémoire F1.

Pour lire les première et dernière paires de colonnes, on sélectionne les mémoires FIFO contenant des données non-utilisées afin de libérer l'espace que ces données occupent.

De façon générale, pour lire dans N mémoires FIFO les premières colonnes d'une matrice, on sélectionne simultanément les p premières mémoires FIFO, mais on tient seulement compte de la sortie de la p-ième qui est celle qui contient la première colonne de la matrice. Pour lire les dernières colonnes de la matrice, on sélectionne simultanément les d dernières mémoires FIFO, mais on tient seulement compte de la sortie de la (N-d+1)ième qui est celle qui contient la dernière colonne.

La première colonne de la matrice est, dans la mémoire 62, celle de rang égal à la composante horizontale Vh modulo le nombre de colonnes (huit) que l'on transmet en parallèle sur le bus d'entrée de la mémoire 62.

La présente invention a été décrite en relation avec des colonnes de matrices. Bien entendu, les colonnes peuvent aussi bien être des colonnes verticales que des colonnes horizontales.

## Revendications

1. Filtre demi-pixel de matrices de pixels pour le filtrage selon les normes MPEG comprenant :
- n bus d'entrée (B0, B1, ...) pour recevoir des pixels de n colonnes successives de la matrice ;
- n circuits de retard (20, 21) recevant respectivement les pixels des n bus d'entrée, ces circuits de retard introduisant chacun un retard d'une colonne, d'où il résulte que 2n pixels sont simultanément transmis sur successivement les sorties des n circuits de retard et les n bus d'entrée ; et
- n additionneurs (23, 24) connectés au moins de manière que le i-ème additionneur (i=1,2,...n) reçoive le i-ème des 2n pixels sur une première entrée et le (i+1)ème des 2n pixels sur une deuxième entrée.

2. Filtre selon la revendication 1, **caractérisé en ce que** les n additionneurs (23, 24) sont connectés à un commutateur (26) prévu pour que le i-ème additionneur reçoive :
- sur sa première entrée l'un parmi les i-ème à (i+n-1)ème des 2n pixels,
- sur sa deuxième entrée l'un parmi les (i+1)ème à (i+n)ème des 2n pixels,
selon qu'un vecteur déterminant la position de la matrice dans une image a une composante horizontale (Vh) respective égale à 0 à n-1 modulo n.

3. Filtre selon la revendication 1, **caractérisé en ce que** la sortie de chacun des n additionneurs (23, 24) est reliée à un additionneur supplémentaire respectif (32, 33) directement et par l'intermédiaire d'un circuit de retard (35, 36) d'au moins un pixel.

4. Filtre selon la revendication 3, **caractérisé en ce que** le retard d'au moins un pixel est d'un pixel si la matrice traitée est une matrice de pixels de luminance (Y) et de deux pixels si la matrice traitée est une matrice de pixels de chrominance (UV).

5. Procédé de traitement d'une matrice de pixels cherchée à l'aide d'un vecteur de position (V) dans une mémoire d'image (60) accessible par un bus de M pixels de large, **caractérisé en ce qu'**il comprend les étapes suivantes :
- écrire par le bus dans une mémoire à double accès (62) successivement toutes les bandes d'image (A-E) de M pixels de large contenant partiellement la matrice ;
- lire dans la mémoire à double accès par un bus (B0, B1) de n pixels de large toutes les bandes d'image de n pixels de large contenant partiellement la matrice ; et
- fournir ces bandes ligne par ligne à un filtre (10) selon la revendication 1.

## Claims

1. An half-pixel matrix filter for a filtering according to MPEG standard, including:
- n input buses (B0, B1, ...) to receive pixels of n successive columns of the matrix;
- n delay circuits (20, 21) respectively receiving the pixels from the n input buses, each of said delay circuits introducing a delay of one column, whereby 2n pixels are simultaneously transmitted to the outputs of the n delay circuits and to the n input buses, successively; and
- n adders (23, 24) connected at least so that the i-th adder (i=1, 2, ...n) receives the i-th of the 2n pixels at a first input and the (i+1)th of the 2n pixels at a second input.

2. The filter of claim 1, wherein the n adders (23, 24) are connected to a switch (26) provided so that the i-th adder receives:
- at its first input, one among the i-th to the (i+n-1)th of the 2n pixels,
- - at its second input, one among the (i+1)th to the (i+n)th of the 2n pixels,
depending on whether a vector determining the position of the matrix in a picture has a respective horizontal component (Vh) equal to 0 to n -1 modulo n.

3. The filter of claim 1, wherein the output of each of the n adders (23, 24) is connected to a respective additional adder (32, 33) directly and through an at least one pixel delay circuit (35, 36).

4. The filter of claim 3, wherein the delay of at least one pixel is a one pixel delay if the processed matrix is a matrix (Y) of luminance pixels and is a two pixel delay if the processed matrix is a matrix (U, V) of chrominance pixels.

5. A method for processing a pixel matrix that is fetched with a location vector (V) in a picture memory (60) accessible through a bus having a width of M pixels, **characterized in that** it includes the following steps:
- writing through the bus in a dual-access memory (62) successively all the M-pixel wide picture bands (A-E) partially including the matrix;
- reading in the dual-port memory through an n-pixel wide bus (B0, B1) all the n-pixel wide picture bands partially including the matrix; and
- providing said bands line by line to a filter (10) according to claim 1.

## Patentansprüche

1. Ein Halb-Pixel-Matrix-Filter zum Filtern gemäß dem MPEG Standards, wobei Folgendes vorgesehen ist:
- n Eingangsbusse (B0, B1, ...) zum Empfang von Pixeln von n aufeinanderfolgenden Spalten der Matrix.
- n Verzögerungsschaltungen (20, 21), die jeweils Pixel von den n Eingangsbussen empfangen, wobei jede der Verzögerungsschaltungen eine Verzögerung von einer Spalte einführt, wodurch 2n Pixel gleichzeitig zu den Ausgängen der n Verzögerungsschaltungen und zu den n Eingangsbussen, sukzessiv, übertragen werden;
- n Addierer (23, 24), die mindestens derart angeschlossen sind, das der i-te Addierer (i=1, 2, ...n) das i-te der 2n Pixel am ersten Eingang und das (i+1)te der 2n Pixel am zweiten Eingang empfängt.

2. Filter nach Anspruch 1, wobei die n Addierer (23, 24) mit einem Schalter (26) verbunden sind, der derart vorgesehen ist, dass der i-te Addierer Folgendes empfängt:
- an seinem ersten Eingang eines der i-ten bis (i+n-1)ten der 2n Pixel;
- an seinem zweiten Eingang eines von den (i+1)nten bis (i+n)ten der 2n Pixel,
und zwar abhängig davon, ob ein die Position der Matrix in einem Bild bestimmenden Vector eine entsprechende Horizontalkomponente (Vh) gleich 0 bis n-1 Modulo n besitzt.

3. Filter nach Anspruch 1, wobei der Ausgang jedes der n Addierer (23, 24) mit einem entsprechenden zusätzlichen Addierer (32, 33) direkt und durch eine mindestens eine Pixel-Verzögerungs-Schaltung (35, 36) verbunden ist.

4. Filter nach Anspruch 3, wobei die Verzögerung von mindestens einem Pixel eine Pixelverzögerung dann ist, wenn die verarbeitete Matrix eine Matrix (Y) von Chrominance-Pixeln ist und eine Zwei-Pixel-Verzögerung dann, wenn die verarbeitete Matrix von (U, V) Chrominance-Pixeln ist.

5. Verfahren zur Verarbeitung einer Pixelmatrix, die mit einem Lokalisierungsvektor (V) in einem Bildspeicher (60) geholt wird und zwar zugreifbar durch einen Bus mit einer Breite von M Pixeln, **dadurch gekennzeichnet, dass** die Folgenden Schritte vorgesehen sind:
- ein Schreiben durch den Bus in einen Dual-Zugriffs-Speicher (62) sukzessiv sämtlicher M-Pixel-Breitenbild-Bänder (A-E) und zwar partiell die Matrix umfassend;
- lesen in dem Dual-Angriffs- oder Anschluss-Speicher durch einen n-Pixel breiten Bus (B0, B1), wobei der sämtlichen n-Pixel-breiten-Bildbänder partiell die Matrix einschließend;
- Vorsehen der erwähnten Bänder Zeile für Zeile zu einem Filter (10) gemäß Anspruch 1.
